# EUROPÄISCHE PATENTSCHRIFT

(11) **EP 3 939 109 B1**
(45) Veröffentlichungstag und Bekanntmachung des Hinweises auf die Patenterteilung: **18.01.2023**
(21) Anmeldenummer: 20703405.9
(22) Anmeldetag: 30.01.2020
(51) Int. Cl.: H01M 8/10, H01M 8/0271, H01M 8/1004, H01M 8/242, H01M 8/0273

(54) **BRENNSTOFFZELLENAUFBAU, BRENNSTOFFZELLENSYSTEM UND BRENNSTOFFZELLENFAHRZEUG**
FUEL CELL STRUCTURE, FUEL CELL SYSTEM AND VEHICLE COMPRISING A FUEL CELL
STRUCTURE DE PILE À COMBUSTIBLE, SYSTÈME DE PILE À COMBUSTIBLE ET VÉHICULE COMPRENANT UNE PILE À COMBUSTIBLE

(30) Priorität: 11.03.2019 DE 102019203249
(43) Veröffentlichungstag der Anmeldung: 19.01.2022
(73) Patentinhaber: Audi AG, 85049 Ingolstadt (DE)
(72) Erfinder: RIEDE, Nico, 70806 Kornwestheim (DE)
(74) Vertreter: Hentrich Patent- & Rechtsanwälte PartG mbB
(86) Internationale Anmeldenummer: PCT/EP2020/052214
(87) Internationale Veröffentlichungsnummer: WO 2020/182364

(56) Entgegenhaltungen:
- EP-A1- 1 018 177
- DE-A1-102016 212 912
- US-A1- 2006 127 738

## Beschreibung

Die Erfindung betrifft einen Brennstoffzellenaufbau mit einer Membranelektrodenanordnung, welche eine Membran und eine erste Elektrode umfasst, die an einer ersten Seite der Membran angeordnet ist und der eine erste Gasdiffusionslage zugeordnet ist, sowie mit einem Rahmen, welcher vorzugsweise zwischen der ersten Elektrode und der ersten Gasdiffusionslage angeordnet ist, wobei an einem Randbereich der Membranelektrodenanordnung eine die Membranelektrodenanordnung mit dem Rahmen zumindest bereichsweise unmittelbar verbindende Haftschicht vorhanden ist. Die Erfindung betrifft außerdem ein Brennstoffzellensystem und ein Brennstoffzellenfahrzeug mit einem oder mit mehreren solcher Brennstoffzellenaufbauten. Ein derartiger Brennstoffzellenaufbau ist aus einer nicht vorveröffentlichen Anmeldung der Anmelderin bekannt, welcher sich gut bewährt hat und der für seine Herstellung nur einen geringen Materialeinsatz bei gleichzeitig hoher Stabilität vorweist.

Ein weiterer Brennstoffzellenaufbau ist der WO 2018 / 217 586 A1 zu entnehmen, bei dem eine Klebeschicht die Bipolarplatte mit der Elektrode einer Membranelektrodenanordnung verbindet. In der WO 2010 / 080 450 A1, DE 10 2016 212912 A1 und der US 2014 / 0 004 442 A1 sind Brennstoffzellenaufbauten beschrieben, die sich mit der Fixierung und Abdichtung der Membranelektrodenanordnung beschäftigen.

Es ist daher die Aufgabe der vorliegenden Erfindung, einen verbesserten Brennstoffzellenaufbau anzugeben. Zudem ist es die Aufgabe der vorliegenden Erfindung, ein verbessertes Brennstoffzellensystem und ein verbessertes Brennstoffzellenfahrzeug bereitzustellen.

Die Aufgabe der vorliegenden Erfindung wird durch einen Brennstoffzellenaufbau gemäß dem Merkmalsbestand des Anspruchs 1, durch ein Brennstoffzellensystem mit dem Merkmalsbestand des Anspruchs 8 und durch ein Brennstoffzellenfahrzeug mit den Merkmalen des Anspruchs 9 gelöst. Vorteilhafte Ausgestaltungen mit zweckmäßigen Weiterbildungen der Erfindung sind in den abhängigen Ansprüchen angegeben.

Der erfindungsgemäße Brennstoffzellenaufbau zeichnet sich dabei insbesondere dadurch aus, dass die Haftschicht die erste Elektrode teilweise, vorzugsweise aber vollständig durchdringt, und dass die Membran aufgrund dieser Durchdringung unmittelbar mit dem Rahmen verbunden ist.

Dies gewährleistet einerseits, dass die Elektrode mechanisch stabiler mit dem Rahmen verbunden ist, da die Haftschicht die Elektrode teilweise, vorzugsweise aber vollständig durchdringt. Andererseits wird aber durch die Durchdringung der Elektrode mit dem Material der Haftschicht zusätzlich eine sichere Fixierung der Membran an den Rahmen gewährleistet, was zu einer gesteigerten Stabilisierung des Brennstoffzellenaufbaus beiträgt. Beides führt zudem zu einer noch besseren Fixierung der Elektrode an die Membran.

Das Material der Haftschicht oder des Klebstoffes ist vorzugsweise aus einem Polymer gebildet. Damit ergibt sich eine geeignete Kontaktierung der Membran mit der Haftschicht, denn dann liegt eine Verbindung eines Polymers mit einem - ggfs. weiteren - Polymer vor, womit ein verstärkter adhäsiver Effekt einhergeht. Wenn der Rahmen ebenfalls aus einem Polymer gebildet ist, so ergibt sich auch hierdurch eine geeignete Kontaktierung der Haftschicht mit dem Rahmen. Auch hier liegt dann eine Verbindung eines Polymers mit einem - ggfs. weiteren - Polymer vor, womit ein verstärkter adhäsiver Effekt einhergeht.

Bei der Erfindung ist insbesondere genau ein Rahmen zwischen der ersten Elektrode und der ersten Gasdiffusionslage angeordnet, wobei die Haftschicht die Membranelektrodenanordnung in einem Randbereich lateral zumindest zum Teil umschließt. Der genau eine Rahmen reduziert das für den Brennstoffzellenaufbau benötigte Material und die für den Brennstoffzellenaufbau benötigten Lagen, so dass die Herstellung vereinfacht wird. Gleichzeitig ermöglicht die Haftschicht ein stabiles Verbinden der Membran der Membranelektrodenanordnung mit dem Rahmen, wobei die Materialmenge ebenfalls dadurch reduziert wird, dass sie lediglich in einem Randbereich der Membranelektrodenanordnung angeordnet ist.

Unter dem Randbereich der Membranelektrodenanordnung wird ein die Membranelektrodenanordnung außenumfangsseitig umgebender, zumindest die erste Elektrode durchdringender, mit einem sich parallel zur Stapelrichtung und sich teilweise orthogonal zur Stapelrichtung erstreckender Bereich verstanden. Die Erstreckung des Randbereichs orthogonal zur Stapelrichtung entspricht dabei jeweils weniger als 30 Prozent, vorzugsweise weniger als 20 Prozent, weiterhin vorzugsweise weniger als 10 Prozent und ganz besonders bevorzugt weniger als 5 Prozent der lateralen Gesamterstreckung der Membranelektrodenanordnung.

Der Querschnitt der Haftschicht ist dabei vorzugsweise U-förmig oder C-förmig gebildet. Dadurch dient die Haftschicht sowohl als zusätzliche laterale Schutzschicht, als auch der Isolierung und/oder Abdichtung der Membranelektrodenanordnung. In einer alternativen Ausgestaltung kann der Querschnitt der Haftschicht auch L-förmig gebildet sein.

Insbesondere ist es sinnvoll, dass die Membranelektrodenanordnung eine zweite Elektrode umfasst, die auf einer der erste Seite gegenüberliegenden zweiten Seite angeordnet ist, wobei der zweiten Elektrode vorzugsweise eine zweite Gasdiffusionslage zugeordnet ist. Die Haftschicht kann in dieser Weitergestaltung auch ausgebildet sein, die zweite Elektrode zu durchdringen und damit die Membran der Membranelektrodenanordnung unmittelbar zu kontaktieren.

Die Durchdringung der Elektroden mit dem Material der Haftschicht lässt sich auf eine vorteilhafte Weise dadurch realisieren, dass die erste Elektrode eine Porosität aufweist, die derart gewählt ist, dass die Haftschicht die erste Elektrode teilweise, vorzugsweise vollständig durchdringt, um den Rahmen mit der Membran zu verbinden. Die Porosität/Oberflächenenergie (oder im Allgemeinen: die Beschaffenheit) der Elektrode und das Fließverhalten (Viskosität, etc.) des Klebstoffs sind dabei aufeinander abgestimmt.

Alternativ oder ergänzend kann die Haftschicht auch eine Viskosität aufweisen, die derart gewählt ist, dass diese die erste Elektrode teilweise, vorzugsweise vollständig durchdringt, um den Rahmen mit der Membran zu verbinden. Auch hier ist eine geeignete Abstimmung der Einzelnen Komponenten aufeinander vorhanden, die zur gewünschten Haftverbindung führt. Damit kann auch bei einer geringen Porosität der Elektroden erreicht werden, dass eine unmittelbare Kontaktierung der Haftschicht mit der Polymerelektrolytmembran erfolgt.

Zusätzlich oder alternativ kann die Haftschicht eine Oberflächenenergie und/oder einer Oberflächenspannung bezüglich des Elektrodenmaterials aufweisen, die derart gewählt ist, dass die erste und/oder die zweite Elektrode teilweise, vorzugsweise vollständig durchdrungen werden, um insbesondere den Rahmen mit der Membran zu verbinden.

Zur Vereinfachung der Montage des Brennstoffzellenaufbaus hat es sich als sinnvoll erwiesen, wenn die die Membran umschließende Haftschicht einen die Membran der Membranelektrodenanordnung an dem Randbereich mit dem Rahmen verbindenden ersten Haftschichtabschnitt und einen die Membran der Membranelektrodenanordnung an dem Randbereich mit der zweiten Gasdiffusionslage verbindenden zweiten Haftschichtabschnitt aufweist.

Zur weiteren Reduzierung des Herstellungaufwands ist es bevorzugt, dass die Membran und die Elektroden in lateraler Ausdehnung mit einem identischen Flächeninhalt gebildet sind. Aufgrund der Auswahl geeigneter Einheitsgrößen, lassen sich Rüstzeiten zur Umstellung von Stanzvorrichtung oder der Vorbereitung von Heißpressen reduzieren.

In diesem Zusammenhang ist es vorteilhaft, wenn der Rahmen eine Aussparung mit einem Strömungsquerschnitt aufweist, dessen Flächeninhalt geringer als der laterale Flächeninhalt ist. Dies verbessert das Strömungsverhalten der Reaktanten der Brennstoffzelle.

Es ist vorteilhaft, wenn die erste Gasdiffusionslage auf ihrer der ersten Elektrode zugewandten Seite eine erste mikroporöse Lage aufweist und/oder die zweite Gasdiffusionslage auf ihrer der zweiten Elektrode zugewandten Seite eine zweite mikroporöse Lage aufweist. Die mikroporösen Lagen dienen der Verbesserung eines Kathoden- oder eines Brennstofftransports und erhöht die Leistung der Brennstoffzelle, indem der Wassergehalt der Membranelektrodenanordnung erhöht wird. Die mikroporösen Lagen können dabei integraler Bestandteil der jeweiligen Gasdiffusionslage sein. Sie können aber auch als getrenntes, separates Bauteil vorliegen.

Es ist zudem die Möglichkeit vorhanden, dass eine die erste Gasdiffusionslage umfangsseitig abdichtende erste Dichtungslage dem Rahmen auf einer ersten Rahmenseite zugeordnet ist und eine die zweite Gasdiffusionslage und die Membran umfangsseitig abdichtende zweite Dichtungslage dem Rahmen auf einer der ersten Rahmenseite gegenüberliegenden zweiten Rahmenseite zugeordnet ist. Dabei sind die Dichtungslagen bevorzugt als komprimierbare Dichtungslippen oder Dichtungslinien gebildet.

Um die umfangsseitige Abdichtung zu verbessern, sind die Dichtungslippen lateral jeweils mehrfach vorgesehen, insbesondere zweifach oder dreifach. Die Dichtungslippen der ersten Dichtungslage weisen dabei bevorzugt einen größeren Durchmesser auf als die Dichtungslippen der zweiten Dichtungslage. Dies ermöglicht, dass die Gasdiffusionslagen und die Membranelektrodenanordnung in lateraler Richtung flüssigkeits- und/oder gasdicht bzw. fluiddicht abgedichtet sind.

Der erfindungsgemäße Brennstoffzellenaufbau entfaltet seine Vorteile beim Einsatz in einem erfindungsgemäßen Brennstoffzellensystem. Die für den Brennstoffzellenaufbau beschriebenen Vorteile und bevorzugten Ausführungsformen gelten dabei auch für das erfindungsgemäße Brennstoffzellensystem, welches sich durch eine erhöhte Sicherheit und Stabilität auszeichnet.

Die für den Brennstoffzellenaufbau beschriebenen Vorteile und bevorzugten Ausführungsformen gelten dabei auch für das erfindungsgemäße Brennstoffzellenfahrzeug. Es zeichnet sich durch eine größere Reichweite aus, denn Diffussionsverluste von Reaktanten, insbesondere von Brennstoff, treten beim Einsatz des erfindungsgemäßen Brennstoffzellenaufbaus seltener auf als bisher.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen als von der Erfindung umfasst und offenbart anzusehen, die in den Figuren nicht explizit gezeigt oder erläutert sind, jedoch durch separierte Merkmalskombinationen aus den erläuterten Ausführungen hervorgehen und erzeugbar sind.

Weitere Vorteile, Merkmale und Einzelheiten der Erfindung ergeben sich aus den Ansprüchen, der nachfolgenden Beschreibung bevorzugter Ausführungsformen sowie anhand der Zeichnung. Dabei zeigt:

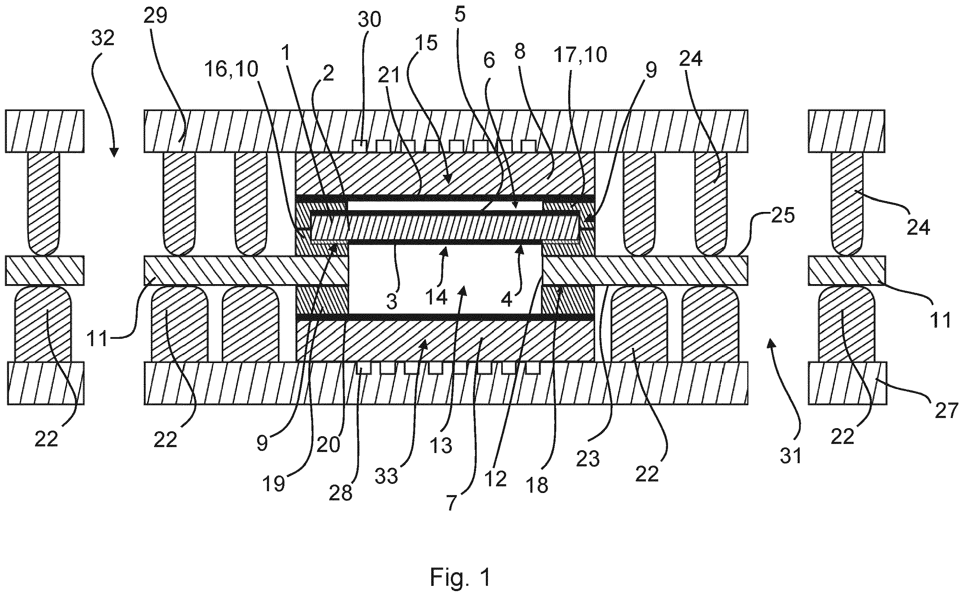

- Fig. 1: eine Schnittdarstellung eines Brennstoffzellenaufbaus.

Fig. 1 zeigt einen Brennstoffzellenaufbau mit einer Membranelektrodenanordnung 1, welche eine semipermeable Membran 2 mit einer ersten Elektrode 3 auf ihrer ersten Seite 4 und mit einer zweite Elektrode 5 auf ihrer der ersten Seite 4 gegenüberliegenden zweiten Seite 6 umfasst. Die erste Elektrode 3 ist dabei vorzugsweise als eine Anode gebildet und die zweite Elektrode 5 ist vorzugsweise als eine Kathode gebildet. Es besteht aber auch die Möglichkeit, dass die erste Elektrode 3 die Kathode und die zweite Elektrode 5 die Anode der Membranelektrodenanordnung 1 bildet. Die Membran 2 ist vorzugsweise auf der ersten Seite 4 und auf der zweiten Seite 6 mit einer Katalysatorschicht aus Edelmetallen oder Gemischen umfassend Edelmetalle wie Platin, Palladium, Ruthenium oder dergleichen beschichtet, die als Reaktionsbeschleuniger bei der Reaktion der Brennstoffzelle dienen. Die jeweilige Katalysatorschicht ist dabei integraler Bestandteil der entsprechenden Elektrode 3, 5 oder bildet diese selbst aus.

In einer derartigen Polymerelektrolytmembranbrennstoffzelle (PEM-Brennstoffzelle) werden an der ersten Elektrode 3 (Anode) Brennstoff oder Brennstoffmoleküle, insbesondere Wasserstoff, in Protonen und Elektronen aufgespaltet. Die Membran 2 lässt die Protonen (z.B. H⁺) hindurch, ist aber undurchlässig für die Elektronen (e⁻). Die Membran 2 ist aus einem lonomer, vorzugsweise einem sulfonierten Tetrafluorethylen-Polymer (PTFE) oder einem Polymer der perfluorierten Sulfonsäure (PFSA) gebildet. Die Membran 2 kann alternativ auch als eine sulfonierte Hydrocarbon-Membran gebildet sein. An der Anode erfolgt dabei die folgende Reaktion: 2H₂ → 4H⁺ + 4e⁻(Oxidation/Elektronenabgabe).

Während die Protonen durch die Membran 2 zur zweiten Elektrode 5 (Kathode) hindurchtreten, werden die Elektronen über einen externen Stromkreis an die Kathode oder an einen Energiespeicher geleitet. An der Kathode ist ein Kathodengas, insbesondere Sauerstoff oder Sauerstoff enthaltende Luft, bereitgestellt, so dass hier die folgende Reaktion stattfindet: O₂ + 4H⁺ + 4e⁻→ 2H₂O (Reduktion/Elektronenaufnahme).

Der ersten Elektrode 3 ist eine erste Gasdiffusionslage 7 zugeordnet und der zweiten Elektrode 5 ist eine zweite Gasdiffusionslage 8 zugeordnet. Die Gasdiffusionslagen sind bevorzugt aus Kohlenstoff-Faser-Papier (CFP="Carbon Fiber Paper") gebildet. Einheitliche Abmessungen halten den Fertigungsaufwand für die Einzelbestandteile des Brennstoffzellenaufbaus 1 so gering wie möglich. Deshalb weist die Membran 2 in lateraler Ausdehnung einen (Querschnitts-)Flächeninhalt auf, der demjenigen der Elektroden 3, 5 entspricht.

Zur Verbesserung einer Fluid- oder Gasströmung innerhalb des Brennstoffzellenaufbaus und zur Erhöhung eines Wassergehalts in der Membran ist der ersten Gasdiffusionslage 7 auf ihrer der ersten Elektrode 3 zugewandten Seite eine erste mikroporöse Lage 20 zugeordnet. Ebenso ist der zweiten Gasdiffusionslage 8 an ihrer der zweiten Elektrode 5 zugewandten Seite eine zweite mikroporöse Lage 21 zugeordnet. Die lateralen Abmessungen der mikroporösen Lagen 20, 21 entsprechen dabei im Wesentlichen den lateralen Abmessungen der jeweiligen Gasdiffusionslage 7, 8.

Um die Stabilität des Brennstoffzellenaufbaus zu vergrößern, ist zwischen der ersten Elektrode 3 und der ersten Gasdiffusionslage 7 ein Rahmen 11 mit einer Aussparung 12 angeordnet. Ein aktiver Bereich 14 der Membranelektrodenanordnung 1 kann dabei mittels eines durch die Aussparung 12 vorgegebenen Strömungsquerschnitts 13 vorgegeben sein.

Gleichzeitig weist der Strömungsquerschnitt 13 der Aussparung 12 einen geringeren Flächeninhalt auf als der Flächeninhalt eines Strömungsquerschnitts 15 der zweiten Gasdiffusionslage 8. Der Strömungsquerschnitt 33 der ersten Gasdiffusionslage 7 entspricht im Wesentlichen dem Strömungsquerschnitt 15 oder dem orthogonal zur Stapelrichtung orientierten Querschnitt der zweiten Gasdiffusionslage 8.

Die Membranelektrodenanordnung 1 weist außenumfangsseitig einen Randbereich 9 auf. Unter dem Randbereich 9 der Membranelektrodenanordnung 1 wird ein die Membranelektrodenanordnung 1 außenumfangsseitig umgebender, sich parallel und zum Teil orthogonal zur Stapelrichtung erstreckender Bereich der Membranelektrodenanordnung 1 verstanden.

Für eine feste Verbindung des Rahmens 11 mit der Membranelektrodenanordnung 1 ist eine Haftschicht 10 vorhanden. Die Haftschicht 10 verbindet den Rahmen 11 erfindungsgemäß unmittelbar mit der Membran 2 der Membranelektrodenanordnung. Dabei ist die erste Elektrode 3 vom Material der Haftschicht 10 vollständig durchdrungen, wozu sie vorzugsweise eine geeignete Porosität aufweist. In gleicher Weise kann die Membran 2 der Membranelektrodenanordnung 1 im Randbereich 9 zusätzlich mit der zweiten Gasdiffusionslage 8 mittels der Haftschicht 10 unmittelbar verbunden sein, wobei auch hier die zweite Elektrode 5 mit geeigeneter Porosität versehen und vom Material der Haftschicht 10 vollständig durchdrungen ist.

Vorliegend umschließt die Haftschicht 10 die Membran der Membranelektrodenanordnung 1 in dem Randbereich 9 lateral, das heißt außenumfangsseitig; insbesondere vollständig. Die Haftschicht 10 weist dabei einen U-förmigen oder C-förmigen Querschnitt auf und ist aus einem ersten Haftschichtabschnitt 16 und einem zweiten Haftschichtabschnitt 17 gebildet. Der erste Haftschichtabschnitt 16 verbindet - durch die erste Elektrode 3 hindurch - die Membran 2 in einem Randbereich 9 der Membranelektrodenanordnung 1 mit einem nahe der Aussparung 12 vorhandenen Innenrandbereich 18 des Rahmens 11. Der Innenrandbereich 18 des Rahmens 11 ist dabei als ein innenumfangsseitig sich zum Teil nach außen erstreckender Teilbereich des Rahmens 11 gebildet. Der zweite Haftschichtabschnitt 17 verbindet die zweite Gasdiffusionslage 8 - durch die zweite Elektrode 5 hindurch - mit der Membran 2 im Randbereich 9 der Membranelektrodenanordnung 1. Darüber hinaus ist eine zweite Haftschicht 19 vorhanden, die den Innenrandbereich 18 des Rahmens 11 mit der ersten Gasdiffusionslage 7 verbindet. Bei der Montage des Brennstoffzellenaufbaus verschmelzen die beiden Haftschichtabschnitte 16 und 17 zu einer gemeinsamen Haftschicht 10 mit einem monolithischen Aufbau.

Zur Zuführung von Brennstoff an die erste Elektrode 3 ist anodenseitig eine an die erste Gasdiffusionslage 7 angelegte oder dieser zugeordnete sowie ein Anodengasflussfeld 28 bereitstellende erste Bipolarplatte 27 vorhanden. Weiterhin ist der kathodenseitigen, zweiten Gasdiffusionslage 8 eine zweite Bipolarplatte 29 zur Zuführung des Kathodengases zugeordnet, die über ein Kathodengasflussfeld 30 verfügt. Mittels des Kathodengasflussfeldes 30 wird das Kathodengas durch die zweite Gasdiffusionslage 8 hindurch der zweiten Elektrode 5 zugeführt.

Die laterale Erstreckung, d.h. die Erstreckung senkrecht zur Stapelrichtung, der Bipolarplatten 27, 28 ist größer als die der Gasdiffusionslagen 7, 8 und entspricht im Wesentlichen der des Rahmens 11. Zwischen einer ersten Rahmenseite 23 des Rahmens 11 und der ersten Bipolarplatte 27 ist eine die erste Gasdiffusionslage 7 umfangsseitig abdichtende erste Dichtungslage 22 angeordnet. Zwischen einer zweiten Rahmenseite 25 des Rahmens und der zweiten Bipolarplatte 28 ist eine zweite Dichtungslage 24 vorgesehen. Die Dichtungslagen 22, 24 sind dabei als komprimierbare Dichtungslippen gebildet, die lateral jeweils mehrfach vorgesehen sind. Im vorliegenden Ausführungsbeispiel sind lateral jeweils drei Dichtungslippen vorgesehen, die umfangsseitig um die erste Gasdiffusionslage 7 und die zweite Gasdiffusionslage 8 angeordnet sind. Die erste Dichtungslage 22 und die zweite Dichtungslage 24 weisen also jeweils insgesamt sechs der Dichtungslippen auf. Eine andere Anzahl ist möglich. Dabei weisen die Dichtungslippen der ersten Dichtungslage 22 einen größeren Durchmesser auf als die Dichtungslippen der zweiten Dichtungslage 26.

Weiterhin sind lateral zur Membranelektrodenanordnung 1 jeweils ein sich in Stapelrichtung durch die erste Bipolarplatte 27, die zweite Bipolarplatte 29 und den Rahmen 11 erstreckender erster Kanal 31 zur Zuführung des Brennstoffes vorgesehen und ein zweiter Kanal 32 zur Zuführung des Kathodengases zum Brennstoffzellenaufbau. Die Kanäle 31, 32 sind dabei derart innerhalb des Brennstoffzellenaufbaus angeordnet, dass auf der zu den Gasdiffusionslagen 7, 8 zugewandten Seite jeweils zwei Dichtungslippen der ersten Dichtungslage 22 und jeweils zwei Dichtungslippen der zweiten Dichtungslage 24 innerhalb angeordnet sind und auf der dazu gegenüberliegenden Seite jeweils eine Dichtungslippe der ersten Dichtungslage 22 und eine Dichtungslippe der zweiten Dichtungslage 24 außerhalb angeordnet sind.

Aufgrund der Durchdringung der Elektroden 3, 5 mit dem Material der Haftschicht 10 ergibt sich eine geeignete Paarung an Kontaktpartnern, da sowohl die Membran 2 als auch die Haftschicht 10 aus einem Polymer bestehen, was zu einer verbesserten adhäsiven Verbindung führt. Da auch der Rahmen 11 aus einem Polymer gebildet sein kann, ist auch an der Kontaktfläche des Rahmens 11 mit der Haftschicht 10 ein solcher verstärkter adhäsiver Effekt zu verzeichnen. Dies führt insgesamt zu einem noch stabileren Brennstoffzellenaufbau, der zugleich eine verbesserte Abdichtung aufweist.

### BEZUGSZEICHENLISTE:

- 1: Membranelektrodenanordnung
- 2: Membran
- 3: erste Elektrode
- 4: erste Seite (Membran)
- 5: zweite Elektrode
- 6: zweite Seite (Membran)
- 7: erste Gasdiffusionslage
- 8: zweite Gasdiffusionslage
- 9: Randbereich (Membranelektrodenanordnung)
- 10: Haftschicht
- 11: Rahmen
- 12: Aussparung
- 13: Strömungsquerschnitt (Aussparung)
- 14: aktiver Bereich (Membranelektrodenanordnung)
- 15: Strömungsquerschnitt (zweite Gasdiffusionslage)
- 16: erster Haftschichtabschnitt
- 17: zweite Haftschichtabschnitt
- 18: Innenrandbereich des Rahmens
- 19: zweite Haftschicht
- 20: erste mikroporöse Lage
- 21: zweite mikroporöse Lage
- 22: erste Dichtungslage
- 23: erste Rahmenseite
- 24: zweite Dichtungslage
- 25: zweite Rahmenseite
- 27: erste Bipolarplatte
- 28: Anodengasflussfeld
- 29: zweite Bipolarplatte
- 30: Kathodengasflussfeld
- 31: erster Kanal
- 32: zweiter Kanal
- 33: Strömungsquerschnitt (erste Gasdiffusionslage)

## Patentansprüche

1. Brennstoffzellenaufbau mit einer Membranelektrodenanordnung (1), welche eine Membran (2) und eine erste Elektrode (3) umfasst, die an einer ersten Seite (4) der Membran (2) angeordnet ist und der eine erste Gasdiffusionslage (7) zugeordnet ist, wobei die Membranelektrodenanordnung (1) eine zweite Elektrode (5) umfasst, die auf einer der erste Seite (4) gegenüberliegenden zweiten Seite (6) angeordnet ist, wobei der zweiten Elektrode (5) eine zweite Gasdiffusionslage (8) zugeordnet ist, sowie mit einem Rahmen (11), wobei an einem Randbereich (9) der Membranelektrodenanordnung (1) eine die Membranelektrodenanordnung (1) mit dem Rahmen (11) zumindest bereichsweise unmittelbar verbindende Haftschicht (10) vorhanden ist, **dadurch gekennzeichnet, dass** die Haftschicht (10) die erste Elektrode (3) durchdringt, dass die Membran (2) aufgrund dieser Durchdringung unmittelbar mit dem Rahmen (11) verbunden ist, und dass die Haftschicht (10) einen die Membran (2) der Membranelektrodenanordnung (1) an dem Randbereich (9) mit dem Rahmen (11) verbindenden ersten Haftschichtabschnitt (16) und einen die Membran (2) der Membranelektrodenanordnung (1) an dem Randbereich (9) mit der zweiten Gasdiffusionslage (8) verbindenden zweiten Haftschichtabschnitt (17) aufweist.

2. Brennstoffzellenaufbau nach Anspruch 1, **dadurch gekennzeichnet, dass** die erste Elektrode (3) eine Porosität aufweist, die derart gewählt ist, dass die Haftschicht (10) die erste Elektrode (3) vollständig durchdringt, um den Rahmen (11) mit der Membran (2) zu verbinden.

3. Brennstoffzellenaufbau nach Anspruch 1 oder 2, **dadurch gekennzeichnet, dass** die Haftschicht (10) eine Viskosität aufweist, die derart gewählt ist, dass diese die erste Elektrode (3) vollständig durchdringt, um den Rahmen (11) mit der Membran (2) zu verbinden.

4. Brennstoffzellenaufbau nach einem der Ansprüche 1 bis 3, **dadurch gekennzeichnet, dass** die Haftschicht (10) eine Oberflächenenergie und/oder einer Oberflächenspannung aufweist, die derart gewählt ist, dass diese die erste Elektrode (3) vollständig durchdringt, um den Rahmen (11) mit der Membran (2) zu verbinden.

5. Brennstoffzellenaufbau nach einem der Ansprüche 1 bis 4, **dadurch gekennzeichnet, dass** die Membran (2) und die Elektroden (3, 5) in lateraler Ausdehnung mit einem identischen Flächeninhalt gebildet sind.

6. Brennstoffzellenaufbau nach Anspruch 5, **dadurch gekennzeichnet, dass** der Rahmen (11) eine Aussparung (12) mit einem Strömungsquerschnitt (13) aufweist, dessen Flächeninhalt geringer als der laterale Flächeninhalt der Membran (2) ist.

7. Brennstoffzellenaufbau nach Anspruch 5 oder 6, **dadurch gekennzeichnet, dass** eine die erste Gasdiffusionslage (7) umfangsseitig abdichtende erste Dichtungslage (22) dem Rahmen (11) auf einer ersten Rahmenseite (23) zugeordnet ist und eine die zweite Gasdiffusionslage (8) und die Membran (2) umfangsseitig abdichtende zweite Dichtungslage (24) dem Rahmen (11) auf einer der ersten Rahmenseite (23) gegenüberliegenden zweiten Rahmenseite (25) zugeordnet ist.

8. Brennstoffzellensystem mit einem Brennstoffzellenaufbau nach einem der Ansprüche 1 bis 7.

9. Brennstoffzellenfahrzeug mit einem Brennstoffzellensystem umfassend einen Brennstoffzellenaufbau nach einem der Ansprüche 1 bis 7.

## Claims

1. A fuel cell assembly with a membrane electrode assembly (1), which comprises a membrane (2) and a first electrode (3) that is arranged on a first side (4) of the membrane (2) and to which a first gas diffusion layer (7) is associated, whereas the membrane electrode assembly (1) comprises a second electrode (5) that is arranged on a second side (6) opposite the first side (4), whereas the second electrode (5) is associated with a second gas diffusion layer (8), and with a frame (11), whereas on an edge region (9) of the membrane electrode assembly (1), the membrane electrode assembly (1) is directly connected to the frame (11) at least in certain regions via an adhesive layer (10), **characterized in that** the adhesive layer (10) penetrates the first electrode (3), whereas the membrane (2) is directly connected to the frame (11) by virtue of this penetration, and that the adhesive layer (10) comprises a first binding portion (16), which binds the membrane (2) of the membrane electrode assembly (1) at the edge region (9) to the frame (11), and a second binding portion (17), which binds the membrane (2) of the membrane electrode assembly (1) at the edge region (9) to the second gas diffusion layer (8).

2. The fuel cell assembly according to claim 1, **characterized in that** the first electrode (3) has a porosity, which is selected such, that the adhesive layer (10) completely penetrates the first electrode (3) in order to bind the frame (11) to the membrane (2).

3. The fuel cell assembly according to claim 1 or 2, **characterized in that** the adhesive layer (10) has a viscosity, which is selected such, that it completely penetrates the first electrode (3) to bind the frame (11) to the membrane (2).

4. The fuel cell assembly according to any of claims 1 to 3, **characterized in that** the adhesive layer (10) has a surface energy and/or a surface tension, which is selected such, that it completely penetrates the first electrode (3) in order to bind the frame (11) to the membrane (2).

5. The fuel cell assembly according to any one of claims 1 to 4, **characterized in that** the membrane (2) and the electrodes (3,5) have an identical surface area in view of their lateral extension.

6. The fuel cell assembly according to claim 5, **characterized in that** the frame (11) has a recess (12) with a flow cross-section (13), whose area is smaller than the lateral surface area of the membrane (2).

7. The fuel cell assembly according to claim 5 or 6, **characterized in that** the first gas diffusion layer (7) is circumferentially sealed by a first sealing layer (22) associated to the frame (11) on a first frame side (23) and that the second gas diffusion layer (8) is circumferentially sealed by a second sealing layer (24) associated to the frame (11) on a second frame side (25) opposite the first frame side (23).

8. A fuel cell system with a fuel cell assembly according to any of claims 1 to 7.

9. A fuel cell vehicle with a fuel cell system comprising a fuel cell assembly according to any of claims 1 to 7.

## Revendications

1. Structure de pile à combustible avec un agencement d'électrodes à membrane (1), lequel comprend une membrane (2) et une première électrode (3), qui est agencée sur un premier côté (4) de la membrane (2) et à laquelle est associée une première couche de diffusion de gaz (7), dans laquelle l'agencement d'électrodes à membrane (1) comprend une seconde électrode (5), qui est agencée sur un second côté (6) opposé au premier côté (4), dans laquelle une seconde couche de diffusion de gaz (8) est associée à la seconde électrode (5), ainsi qu'avec un cadre (11), dans laquelle une couche adhésive (10) reliant directement, au moins par zones, l'ensemble d'électrodes à membrane (1) au cadre (11) est présente sur une zone de bord (9) de l'ensemble d'électrodes à membrane (1), **caractérisé en ce que** la couche adhésive (10) traverse la première électrode (3), **en ce que** la membrane (2) est reliée directement au cadre (11) en raison de cette traversée, et **en ce que** la couche adhésive (10) présente une première section de couche adhésive (16) reliant la membrane (2) de l'agencement d'électrodes à membrane (1) au cadre (11) au niveau de la zone de bordure (9) et une seconde section de couche adhésive (17) reliant la membrane (2) de l'agencement d'électrodes à membrane (1) à la seconde couche de diffusion de gaz (8) au niveau de la zone de bord (9).

2. Structure de pile à combustible selon la revendication 1, **caractérisée en ce que** la première électrode (3) présente une porosité qui est choisie de telle sorte que la couche adhésive (10) traverse complètement la première électrode (3) pour relier le cadre (11) à la membrane (2).

3. Structure de pile à combustible selon la revendication 1 ou 2, **caractérisée en ce que** la couche adhésive (10) présente une viscosité qui est choisie de telle sorte que celle-ci traverse complètement la première électrode (3) pour relier le cadre (11) à la membrane (2).

4. Structure de pile à combustible selon l'une quelconque des revendications 1 à 3, **caractérisée en ce que** la couche adhésive (10) présente une énergie de surface et/ou une tension de surface qui est choisie de telle sorte qu'elle traverse complètement la première électrode (3) pour relier le cadre (11) à la membrane (2).

5. Structure de pile à combustible selon l'une quelconque des revendications 1 à 4, **caractérisée en ce que** la membrane (2) et les électrodes (3, 5) sont formées en extension latérale avec une surface identique.

6. Structure de pile à combustible selon la revendication 5, **caractérisée en ce que** le cadre (11) présente un évidement (12) avec une section transversale d'écoulement (13) dont la surface est inférieure à la surface latérale de la membrane (2).

7. Structure de pile à combustible selon la revendication 5 ou 6, **caractérisée en ce qu'**une première couche d'étanchéité (22) assurant l'étanchéité périphérique de la première couche de diffusion de gaz (7) est associée au cadre (11) sur un premier côté de cadre (23) et une seconde couche d'étanchéité (24) assurant l'étanchéité périphérique de la seconde couche de diffusion de gaz (8) et de la membrane (2) est associée au cadre (11) sur un second côté de cadre (25) opposé au premier côté de cadre (23).

8. Système de pile à combustible avec une structure de pile à combustible selon l'une quelconque des revendications 1 à 7.

9. Véhicule à pile à combustible avec un système de pile à combustible comprenant une structure de pile à combustible selon l'une quelconque des revendications 1 à 7.
